# EUROPÄISCHE PATENTSCHRIFT

(11) **EP 1 171 884 B1**
(45) Veröffentlichungstag und Bekanntmachung des Hinweises auf die Patenterteilung: **02.01.2003**
(21) Anmeldenummer: 00922454.4
(22) Anmeldetag: 23.03.2000
(51) Int. Cl.: G11B 33/08, G11B 33/14

(54) **FESTPLATTENLAUFWERK MIT OPTIMIERTEM GERÄUSPEGEL**
HARD-DISK DRIVE WITH OPTIMISED NOISE LEVEL
LECTEUR DE DISQUE DUR AVEC NIVEAU SONORE OPTIMISE

(30) Priorität: 25.03.1999 DE 29905525 U
(43) Veröffentlichungstag der Anmeldung: 16.01.2002
(73) Patentinhaber: Fujitsu Siemens Computers GmbH, 81739 München (DE)
(72) Erfinder: SCHMID, Michael, D-89407 Dilligen (DE)
(74) Vertreter: Epping Hermann & Fischer
(86) Internationale Anmeldenummer: DE0000888
(87) Internationale Veröffentlichungsnummer: WO00058968

(56) Entgegenhaltungen:
- EP-A- 0 564 119
- WO-A-93/24932
- WO-A-96/26518
- WO-A-99/39349
- US-A- 5 216 582
- US-A- 5 668 697

## Beschreibung

Die Erfindung bezieht sich auf eine Vorrichtung zur Reduzierung des Geräuschpegels eines Festplattenlaufwerks einer PC-Einheit, eines PC-Systems oder einer PC-Steuereinheit.

Um den Geräuschpegel von einem Festplattenlaufwerk, beispielsweise einer PC-Einheit erzeugten Geräuschpegel und die dadurch hervorgerufene Lärmbelastung des Bedienungspersonals so niedrig wie möglich zu halten, wurden bisher vorzugsweise ausgesuchte, möglichst leise Festplattenlaufwerke eingesetzt. Gelegentlich wurden zur Geräuschdämmung eines Festplattenlaufwerks auch Dämmstoffmatten eingesetzt oder das Laufwerk wurde rundherum mittels Schaumstoff schallgedämmt. Von der Anmelderin durchgeführte Messungen haben jedoch ergeben, daß die vorstehend geschilderten Maßnahmen letztendlich zu keiner nennenswerten Geräuschdämmung geführt haben.

Aus der WO 93/24932 ist ein belüfteter und im wesentlich allseits geschlossener Behälter zur Unterbringung eines Festplattenlaufwerks angegeben. Die Wände des Behälters sind aus Stahl mit einer Wandstärke von 5 mm versehen, so daß der Behälter eine relativ große Masse aufweist, um den Lärmpegel des im Behälter befindlichen Laufwerks zu verringern.

Aus Funktechnische Arbeitsblätter, Ausgabe HI 22, "Kühlung von Leistungstransistoren", erschienen in "Funkschau", Jahrgang. 1965, Nr. 12 sind übliche Maßnahme zur Abfuhr von Wärme bei Leistungstransistoren, insbesondere die Dimensionierung von Kühlkörpern angegeben.

Aufgabe der Erfindung ist es daher, die durch Festplattenlaufwerke von PC-Einheiten oder PC-Systemen hervorgerufene Geräuschbelastung mit vertretbarem Aufwand so niedrig wie möglich zu halten.

Gemäß der Erfindung ist diese Aufgabe bei einer Vorrichtung zur Reduzierung des Geräuschpegels eines Festplattenlaufwerks, beispielsweise einer PC-Einheit mit den Merkmalen im kennzeichnenden Teil des Anspruchs 1 erreicht. Vorteilhafte Weiterbildungen sind Gegenstand der Ansprüche 2 bis 5.

Gemäß einer bevorzugten Ausführungsform der Erfindung ist das Festplattenlaufwerk in einem belüfteten, vorzugsweise quaderförmigen Behälter aus Metall großer Dichte, wie beispielsweise aus Kupferdruckguß, in der Weise untergebracht, daß das Laufwerk im wesentlichen, d.h. abgesehen von einem in der rückwärtigen Wandung des Behälters im Bereich der auf der Laufwerkrückseite vorgesehenen Steckerleiste ausgebildeten Ausschnitt, auf allen Seiten vollständig eingeschlossen; hierdurch ist eine Art Kapselung des Festplattenlaufwerks durch den dieses umgebenden Metallbehälter erreicht.

Gemäß einer vorteilhaften Weiterbildung der Erfindung ist sichergestellt, daß die Oberseite des Festplattenlaufwerks flächig satt an der Innenseite der oberen Behälterwandung anliegt. Hierdurch ist eine gute Wärmeabgabe von der Festplatte an den das Festplattenlaufwerk umgebenden Behälter gewährleistet.

Ein derartiges flächiges Anliegen der Oberseite des Festplattenlaufwerks an der oberen Behälterwandung ist gemäß einer weiteren Ausbildung der Erfindung dadurch erreicht, daß zwischen dem Boden des Metallbehälters und der Unterseite des Festplattenlaufwerks entsprechend bemessene, federnde Stützteile, vorgesehen sind.

Um darüber hinaus eine ausreichende Kühlung der an der Unterseite des Festplattenlaufwerks vorgesehenen elektronischen Bauelemente zu erreichen, sind beispielsweise in der vorderen Wandung des Behälters ein oder mehrere Kanäle zum Ansaugen von Kühlluft ausgebildet. Die Kühlluft strömt an auf der Unterseite des Festplattenlaufwerks vorgesehenen elektronischen Bauelementen entlang und tritt entweder über den in der rückseitigen Behälterwandung ausgebildeten Ausschnitt und/oder über mindestens eine zusätzliche Auslaßöffnung aus dem das Festplattenlaufwerk umschließenden Behälter wieder aus.

Mit Hilfe der erfindungsgemäßen Lösung sind somit auch bei Einsetzen von Standard-Festplattenlaufwerken PC-Einheiten wesentlich geräuschärmer. Obendrein kann der zur Geräuschreduzierung eingesetzte Metallbehälter nicht nur universell bei allen PC-Systemen der Anmelderin verwendet werden, sondern kann auch bei allen bereits ausgelieferten PC-Systemen einschließlich der OEM-Geräte durch Modifikation deren Festplattenkäfige eingesetzt werden.

Nachstehend wird die Erfindung anhand der Zeichnungen im einzelnen erläutert. Es zeigen:
- Fig.1: schematisch einen nicht maßstäblichenh Längsschnitt entlang einer Linie I-I in Fig.2 eines Metallbehälters mit darin untergebrachtem Festplattenlaufwerk;
- Fig.2: schematisch eine nicht maßstäbliche Schnittansicht entlang einer Linie II-II in Fig.1 der Rückseite eines Metallbehälters mit eingesetztem Festplattenlaufwerk, und
- Fig.3: den linken nicht maßstäblich vergrößerten Teil der Schnittansicht der Fig.1.

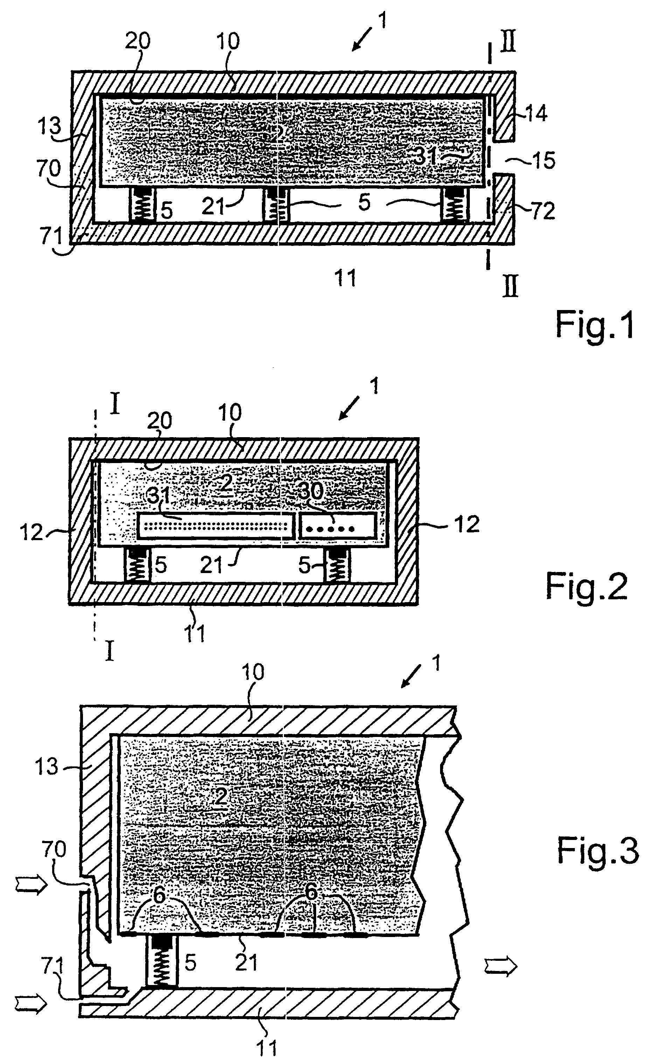

In dem Längsschnitt der Fig.1 ist ein in seiner Gesamtheit mit 1 bezeichneter, quaderförmiger Behälter aus einem Metall großer Dichte, wie beispielsweise aus Kupferdruckguß dargestellt, dessen Wandungen eine entsprechend bemessene Dicke, beispielsweise in der Größenordnung von 1,5 bis 2,5mm aufweisen. Der Behälter 1 besteht aus einem Behälterboden 11, einer diesem gegenüberliegenden, oberen Behälterwandung 10, einer vorderen Behälterwandung 13, einer rückwärtigen Behälterwandung 14 mit einem Ausschnitt 15 und zwei Seitenwandungen 12 (siehe Fig.2).

In dem Behälter 1 ist ein in den Figuren grau unterlegtes Festplattenlaufwerk 2 so untergebracht, daß ein an seiner Rückseite vorgesehener Stecker 30 für die Stromversorgung sowie eine daneben angeordnete vorzugsweise 40-polige Steckerleiste genau gegenüber dem Ausschnitt 15 in der rückseitigen Behälterwandung 14 angeordnet sind.

Wie den Schnittansichten von Fig.1 und 2 zu entnehmen ist, sind zwischen dem Behälterboden 11 und der Unterseite 21 des Festplattenlaufwerks 2 eine Anzahl federnde Stützteile 5 vorgesehen, von denen in Fig.1 drei, in Fig.2 zwei und in Fig.3 einer wiedergegeben sind. Die einzelnen federnden Stützteile 5 sind hierbei so bemessen, daß sichergestellt ist, daß die Oberseite 20 des Festplattenlaufwerks 2 satt und großflächig an der Unterseite der oberen Behälterwandung 10 anliegt.

Durch das satte großflächige Anliegen der Oberseite 20 des Festplattenlaufwerks 2 ein der oberen Behälterwandung ist ein guter Wärmeübergang gewährleistet und dadurch eine gute Wärmeabgabe von der Festplatte über die obere Behälterwandung 10 an die Umgebungsluft erreicht.

Zur Kühlung von an der Unterseite 21 des Festplattenlaufwerks 2 vorgesehenen und in Fig.3 schematisch angedeuteten, elektronischen Bauelementen 6 sind in der dargestellten Ausführungsform in der vorderen Behälterwandung 13 mindestens ein Kanal 70 sowie im Behälterboden 11 gegebenenfalls noch mindestens ein zusätzlicher Kanal 71 vorgesehen. (Die Kanäle 70, 71 sind in Fig.1 gestrichelt angedeutet.)

Über die Kanäle 70 und 71 wird Kühlluft angesaugt, die entweder über den in der rückseitigen Behälterwandung 14 vorgesehenen Ausschnitt 15 und/oder durch eine in der rückwärtigen Behälterwandung vorgesehene Auslaßöffnung 72 (siehe Fig.1) wieder austritt. Durch diese Maßnahmen ist erreicht, daß Kühlluft an den an der Laufwerk-Unterseite 21 vorgesehenen elektronischen Bauelementen 6 entlangströmt und diese dadurch gekühlt werden.

Der das Festplattenlaufwerk 2 weitestgehend umschließende Behälter 1 aus einem Metall großer Dichte sorgt somit für eine beträchtliche Geräuschreduzierung und damit gleichzeitig für eine beachtliche Minderung der Lärmbelastung, welcher das PC-Systeme bedienende Personal ausgesetzt ist. Ferner ist durch die vorstehend beschriebenen weiterne Maßnahmen neben einer guten Wärmeabgabe an der Oberseite des Metallbehälters auch eine ausreichende Kühlung der an der Laufwerkunterseite vorgesehenen elektronischen Bauelemente verwirklicht.

## Patentansprüche

1. Vorrichtung zur Reduzierung des Geräuschpegels eines Festplattenlaufwerks einer PC-Einheit, eines PC-Systems oder einer PC-Steuereinheit, bei der das Festplattenlaufwerk (2) in einem belüfteten, quaderförmigen Behälter (1) aus einem . Metall großer Dichte, wie beispielsweise aus Kupferdruckguß, untergebracht ist, wobei das Laufwerk (2) im wesentlichen auf allen Seiten vollständig eingeschlossen ist, **dadurch gekennzeichnet, daß** zwischen Boden (11) des Behälters (1) und Unterseite (21) des Festplattenlaufwerks (2) federnde Stützteile (5) vorgesehen sind, die so bemessen sind, daß das Festplattenlaufwerk (2) satt an der Innenfläche der oberen Behälterwandung (10) anliegt.

2. Vorrichtung nach Anspruch 1, **dadurch gekennzeichnet, daß** die Oberseite (20) des Festplattenlaufwerks (2) flächig sattanliegend an der Innenfläche der oberen Behälterwandung (10) in Anlage gehalten ist.

3. Vorrichtung nach einem der vorhergehenden Ansprüche, **dadurch gekennzeichnet, daß** in der vorderen Wandung (13) des Behälters (1) mindestens ein Kanal (70, 71) zum Ansaugen von Kühlluft ausgebildet ist, so daß Kühlluft entlang an der Unterseite (21) des Festplattenlaufwerks (2) befindlichen elektronischen Bauelementen (6) entlangströmt und über einen Ausschnitt (15) in der rückseitigen Wandung (14) austritt.

4. Vorrichtung nach Anspruch 3, **dadurch gekennzeichnet, daß** unterhalb des Ausschnitts (15) mindestens eine zusätzliche Auslaßöffnung (72) vorgesehen ist.

## Claims

1. Device for reducing the noise level of a hard-disk drive of a PC unit, of a PC system or of a PC control unit, in which the hard-disk drive (2) is accommodated in a ventilated, cuboidal container (1) made of a high-density metal, such as for example copper die casting, the drive (2) being completely enclosed essentially from all sides, **characterized in that** resilient supporting parts (5) which are dimensioned in such a way that the hard-disk drive (2) bears flush against the inner surface of the upper container wall (10) are provided between the bottom (11) of the container (1) and the underside (21) of the hard-disk drive (2).

2. Device according to Claim 1, **characterized in that** the upper side (20) of the hard-disk drive (2) is held such that it bears in flush contact over its surface area against the inner surface of the upper container wall (10).

3. Device according to one of the preceding claims, **characterized in that** at least one channel (70, 71) for the suction intake of cooling air is formed in the front wall (13) of the container (1), so that cooling air flows along electronic components (6) located on the underside (21) of the hard-disk drive (2) and leaves via a cutout (15) in the rear wall (14).

4. Device according to Claim 3, **characterized in that** at least one additional outlet opening (72) is provided underneath the cutout (15).

## Revendications

1. Dispositif de réduction du niveau de bruit d'un lecteur de disque dur d'une unité PC, d'un système PC ou d'une unité de commande PC, dans lequel le lecteur (2) de disque dur est logé dans un récipient (1) de forme parallélépipédique aéré en un métal de grande densité, comme par exemple en cuivre coulé sous pression, le lecteur (2) étant enfermé sensiblement de tous les côtés, **caractérisé en ce qu'**il est prévu entre le fond (11) du récipient (1) et la face (21) inférieure du lecteur (2) de disque dur des pièces (5) élastiques d'appui qui ont des dimensions telles que le lecteur (2) de disque dur s'appuie à fond sur la face intérieure de la paroi (10) supérieure du récipient.

2. Dispositif suivant la revendication 1, **caractérisé en ce que** la face (20) supérieure du lecteur (2) de disque dur est maintenue en contact en s'appliquant à fond à plat sur la surface intérieure de la paroi (10) supérieure du récipient.

3. Dispositif suivant l'une des revendications précédentes, **caractérisé en ce qu'**il est constitué dans la paroi (13) avant du récipient (1) au moins un canal (70, 71) d'aspiration d'air de refroidissement, de sorte que de l'air de refroidissement passe le long de composants (6) électroniques se trouvant le long de la face (21) inférieure du lecteur (2) de disque dur et sort par une partie (15) découpée dans la paroi (14) arrière.

4. Dispositif suivant la revendication 3, **caractérisé en ce qu'**il est prévu en dessous de la partie (15) découpée au moins une ouverture (72) supplémentaire de sortie.
